# EUROPEAN PATENT APPLICATION

(11) **EP 4 530 927 A1**
(43) Date of publication of application: **02.04.2025**
(21) Application number: 23200438.2
(22) Date of filing: 28.09.2023
(51) Int. Cl.: G06N 3/0475, G06N 3/094, G06N 3/0455

(54) **TRAINING MACHINE LEARNING MODEL FOR FAULT CLASSIFICATION BASED ON SYNTHETIC DATA**

(71) Applicant: ABB SCHWEIZ AG, 5400 Baden (CH)
(72) Inventor: Aydin, Ugur, 00380 Helsinki (FI); Jannasch, Steven, 00380 Helsinki (FI); Schönborn, Sandro, 4059 Basel (CH)
(74) Representative: Kolster Oy Ab

(57) **Abstract**

Disclosed is a method comprising generating synthetic labelled training data based on a set of labelled sensor data associated with one or more industrial automation devices; and training, based at least on the synthetic labelled training data, one or more machine learning models for fault classification associated with the one or more industrial automation devices.

## Description

### FIELD

The following example embodiments relate to industrial automation and to artificial intelligence.

### BACKGROUND

In supervised learning, the accuracy of a machine learning model depends on the amount of labelled training data used for training the machine learning model. There is a challenge in how to train the machine learning model, if the available amount of labelled training data is small.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: generate synthetic labelled training data based on a set of labelled sensor data associated with one or more industrial automation devices; and train, based at least on the synthetic labelled training data, one or more machine learning models for fault classification associated with the one or more industrial automation devices.

According to another aspect, there is provided an apparatus comprising: means for generating synthetic labelled training data based on a set of labelled sensor data associated with one or more industrial automation devices; and means for training, based at least on the synthetic labelled training data, one or more machine learning models for fault classification associated with the one or more industrial automation devices.

According to another aspect, there is provided a method comprising: generating synthetic labelled training data based on a set of labelled sensor data associated with one or more industrial automation devices; and training, based at least on the synthetic labelled training data, one or more machine learning models for fault classification associated with the one or more industrial automation devices.

According to another aspect, there is provided a computer program comprising instructions which, when executed by an apparatus, cause the apparatus to perform at least the following: generating synthetic labelled training data based on a set of labelled sensor data associated with one or more industrial automation devices; and training, based at least on the synthetic labelled training data, one or more machine learning models for fault classification associated with the one or more industrial automation devices.

According to another aspect, there is provided a computer readable medium comprising program instructions which, when executed by an apparatus, cause the apparatus to perform at least the following: generating synthetic labelled training data based on a set of labelled sensor data associated with one or more industrial automation devices; and training, based at least on the synthetic labelled training data, one or more machine learning models for fault classification associated with the one or more industrial automation devices.

According to another aspect, there is provided a non-transitory computer readable medium comprising program instructions which, when executed by an apparatus, cause the apparatus to perform at least the following: generating synthetic labelled training data based on a set of labelled sensor data associated with one or more industrial automation devices; and training, based at least on the synthetic labelled training data, one or more machine learning models for fault classification associated with the one or more industrial automation devices.

### LIST OF DRAWINGS

In the following, various example embodiments will be described in greater detail with reference to the accompanying drawings, in which
FIG. 1 illustrates a communication system to which some example embodiments may be applied;
FIG. 2 illustrates a schematic block diagram according to an example embodiment;
FIG. 3 illustrates a flow chart according to an example embodiment;
FIG. 4 illustrates a flow chart according to an example embodiment; and
FIG. 5 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Different embodiments and examples are described below using single units, models, equipment and memory, without restricting the embodiments and examples to such a solution. Concepts called cloud computing and/or virtualization may be used. Virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN) may cause one or more of the functionalities described below to be migrated to any corresponding abstraction or apparatus or device. Therefore, all words and expressions should be interpreted broadly, and they are intended to illustrate, not to restrict, the example embodiments.

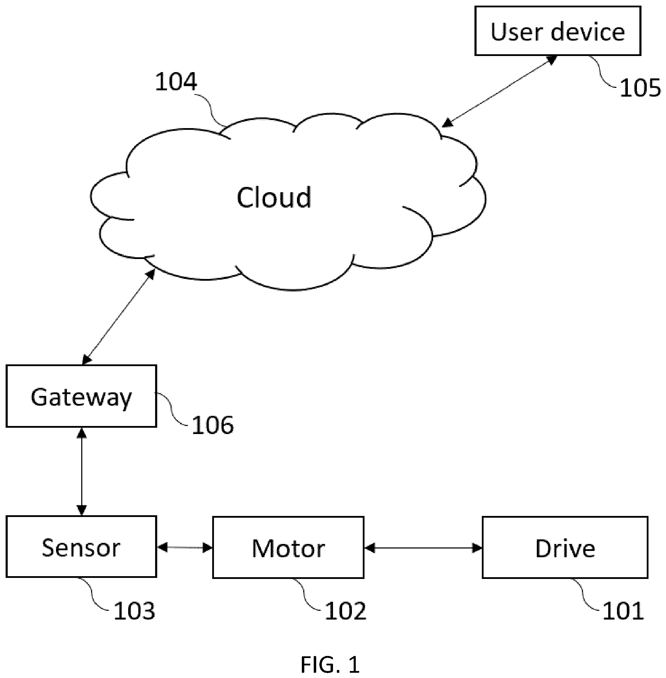

FIG. 1 illustrates a communication system to which some example embodiments may be applied. Referring to FIG. 1, some example embodiments may be based on wireless communications, such as 3G (third generation), 4G (fourth generation), LTE (long term evolution), LTE-A (long term evolution advanced), 5G (fifth generation), 5G NR (new radio), 6G (sixth generation), UMTS (universal mobile telecommunications system), EDGE (enhanced data rates for GSM evolution), WCDMA (wideband code division multiple access), Bluetooth, WLAN (wireless local area network), Wi-Fi, Li-Fi (light fidelity), Ethernet, or any other mobile or wireless or wired network. The communication may also occur between nodes belonging to different but compatible systems, such as LTE and 5G.

It should be noted that FIG. 1 illustrates a simplified system architecture only showing some elements and functional entities, all being logical units whose implementation may differ from what is shown. The connections shown in FIG. 1 are logical connections; the actual physical connections may be different. Data collection may use so-called master protocols, in which a master network node subscribes data from slaves (devices whose data it wants to have), and a slave device or network node sends its data to the receiver/master based on query or automatically based on subscription. It is apparent to a person skilled in the art that the system may also comprise other functions and structures. It should be appreciated that the functions, structures, elements, and protocols used in or for communication are irrelevant to the example embodiments. Therefore, they need not be discussed in more detail here.

Referring to FIG. 1, the system may comprise at least one variable speed drive 101, at least one motor 102, one or more sensor devices 103, a gateway device 106, a cloud platform 104, and a user device 105.

The variable speed drive 101 may also be referred to as a variable frequency drive. The variable speed drive 101 may be used to run or rotate an electric motor 102 at different speeds, wherein the electric motor 102 may run a pump or any other rotating equipment (e.g., fan, gearbox, belt drive, etc.). The variable speed drive 101 may be electrically connected to the electric motor 102. The variable speed drive 101 may comprise or be connected to a controller, for example a proportional-integral-derivative (PID) controller. The controller may be configured to send control signals to the variable speed drive 101. The variable speed drive 101 may control highly dynamic industrial processes, in which for example the speed or torque applied to the motor 102 has to be varied according to the needs of the industrial process.

The one or more sensor devices 103 may be configured to measure values of one or more variables associated with the motor 102 to obtain motor sensor data. For example, the one or more sensor devices 103 may measure values of at least one of: speed, torque, vibration, temperature, magnetic flux density, and/or electrical current of the motor 102 over time. There may be separate sensor devices for measuring each variable (e.g., separate sensors for speed and temperature, respectively), or the variables may be measured by the same sensor device. At least one of the one or more sensor devices 103 may measure values for environmental conditions, such as external temperature and/or humidity outside the motor 102, over time. The one or more sensor devices 103 may be comprised in the motor 102, or attached to the motor 102, or in close proximity to the motor 102.

The one or more sensor devices 103 may be configured to communicate with the cloud platform 104 via a gateway device 106. The gateway device 106 may comprise, for example, an edge gateway or a user device (which may be the same as the user device 105, or different from the user device 105). For example, a mobile phone (or any other user device) may be used as the gateway device 106 to read measurements from the one or more sensor devices 103, and to push those measurements to the cloud platform 104 via an internet connection. The user device used as the gateway device 106 may also be used to view historical measurement information from the one or more sensor devices 103 (stored at the cloud platform 104) via the internet connection.

For enabling the connection between the one or more sensor devices 103 and the gateway device 106, the one or more sensor devices 103 and the gateway device 106 may be equipped with a short-range communication interface, such as Bluetooth, Ethernet, ZigBee, Li-Fi, Wi-Fi, wireless mesh network, NFC, or any other wireless or wired connection. The one or more sensor devices 103 may also be configured to communicate with the motor 102 and/or the variable speed drive 101 via the short-range communication interface. For example, the one or more sensor devices 103 may be configured to transmit the measured motor sensor data to the gateway device 106, and/or to the motor 102 or to the variable speed drive 101, via the short-range communication interface.

The gateway device 106 may be connected to the internet via a network interface, such as 3G, 4G, LTE, LTE-A, 5G, 5G NR, 6G, UMTS, EDGE, WCDMA, WLAN, Wi-Fi, Li-Fi, Ethernet, or any other mobile, wireless or wired network. The gateway device 106 may be connected to the cloud platform 104 via the network interface. The one or more sensor devices 103 may be connected to the cloud platform 104 via the gateway device 106. The one or more sensor devices 103 may be configured to transmit the measured motor sensor data to the cloud platform 104 via the gateway device 106.

The cloud platform 104, also known as a cloud computing platform, refers to a comprehensive and integrated set of cloud-based services and resources that enable users to build, deploy, manage, and scale various applications and services over the internet. It provides a flexible and scalable infrastructure for hosting applications, storing data, and executing computing tasks without the need for on-premises hardware and infrastructure.

The cloud platform 104 may be configured to receive the motor sensor data from the one or more sensor devices 103 via the gateway device 106. The cloud platform 104 may further be configured to store the received motor sensor data in at least one memory or database.

The cloud platform 104 may further be connected to a user device 105 to enable a user of the user device 105 to monitor the condition of the motor 102 via a user interface.

The user device 105 may comprise user equipment such as a smartphone, mobile phone, tablet computer, laptop computer, desktop computer, or any other computing device. The user device 105 may be a remote device located at a different site than the motor 102. Alternatively, the user device 105 may be a local device located on-site at a close proximity to the motor 102.

The user device 105 may be connected to the internet via a network interface, such as 3G, 4G, LTE, LTE-A, 5G, 5G NR, 6G, UMTS, EDGE, WCDMA, WLAN, Wi-Fi, Li-Fi, Ethernet, or any other mobile, wireless or wired network. The user device 105 may be configured to exchange information, i.e., to transmit and/or receive data, with the cloud platform 104 via the network interface.

Industrial automation devices, such as motors and variable speed drives, may be associated with analytics solutions to provide users with condition monitoring tools using sensor data. For example, it may be desirable to provide fault classification tools for electric motors, which can detect faults associated with the motors and predict the actual issue. This may help to minimize the downtime associated with the motors.

In order to develop fault classifiers for electric motors, large amounts of labelled training data for various machines and faults may be needed. Herein a label refers to a health condition of a motor. Some examples of such labels may include (but are not limited to): "healthy", "broken rotor bar", "rotor eccentricity", "bearing inner ring fault", "bearing outer ring fault", "misaligned shaft", or "unbalanced rotor". For example, the labels for different motors and faults may be collected in laboratory environments. However, a huge amount of manual work may be required to collect these labels, therefore making the label gathering process impractical and time consuming.

To tackle the above issue regarding the lack of labelled training data, some example embodiments may utilize generative artificial intelligence (AI) to synthesize new training data with various conditions by utilizing a small amount of initial labelled data. In other words, some example embodiments require significantly less initial labelled real data to learn to synthesize new data with various conditions. The initial labelled data may be obtained from various sources, such as lab measurements, simulation data, and/or synthetic data obtained with domain knowledge. This way, a generative AI model may be trained to learn the characteristics of the signals under various conditions. These conditions may comprise, for instance, different fault cases, machine sizes, loading points, load types, and speed.

The trained generative AI model may then be used to generate synthetic labelled training data. Synthetic data refers to data that is artificially generated rather than produced by real-world events. The synthetic training data may be used to train machine learning models to obtain accurate fault classifiers. As a result, some example embodiments enable the development of accurate fault classifiers, while avoiding time-consuming and impractical manual label gathering processes. In other words, some example embodiments allow to develop a fault classifier for electric motors without needing a huge number of manually labeled data.

Generative AI is a subfield of artificial intelligence focused on creating models and systems that can generate new data that resembles the input data on which they were trained. These models are capable of generating new samples that exhibit similar characteristics to the data they have learned from, allowing them to produce entirely new data points that are not part of the original dataset. The primary goal of generative AI is to generate artificial data that is indistinguishable from real data.

Variational autoencoders and generative adversarial networks are some examples of techniques that may be used in generative AI.

A variational autoencoder is a type of artificial neural network-based generative model that learns to encode and decode data. It consists of an encoder network that maps input data into a latent space, where it is represented by a probability distribution. The decoder network then takes samples from this distribution and reconstructs the original data. Variational autoencoders are useful for generating new samples from a learned data distribution.

Generative adversarial network is another type of artificial neural network-based generative model that uses a generator network to create fake samples and a discriminator network to distinguish between real and fake samples. The generator and discriminator are trained in an adversarial process, where the generator tries to produce samples that are indistinguishable from real data, and the discriminator tries to get better at telling real from fake. This back-and-forth training leads to a generator that can produce highly realistic data samples.

The example embodiments described below may provide various advantages. One such advantage is developing fault classifiers capable of indicating the exact necessary maintenance for electric motors. This may reduce the downtime of the motors. Another advantage is that some example embodiments reduce the burden of experts for checking every anomaly manually to determine the fault type. Another advantage is that some example embodiments reduce the burden of data scientists from manually training fault classification models.

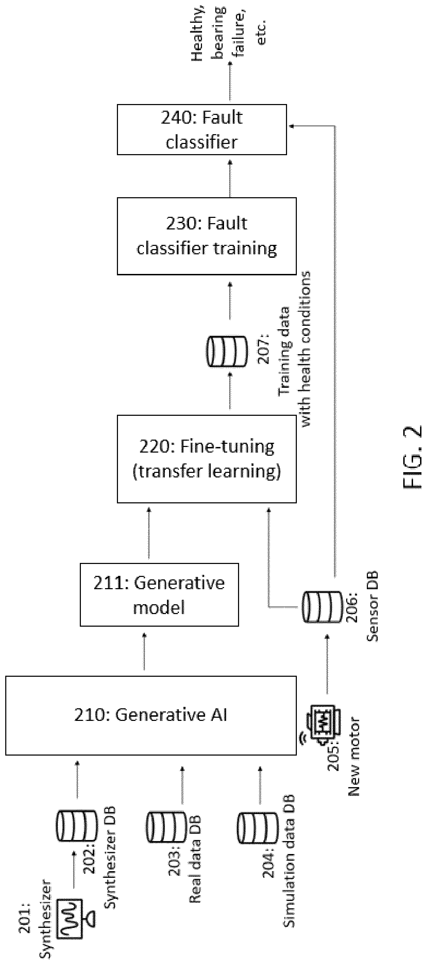

FIG. 2 illustrates a schematic block diagram according to an example embodiment. In FIG. 2, the generative artificial intelligence (AI) 210, the fine-tuning 220, and the fault classifier training 230 may be implemented together for training a fault classifier 240 in an automated manner. For example, the training of the fault classifier 240 (and the generative AI model 211) may be performed in the cloud platform 104 or in any computing device with sufficient computing resources for the training.

Referring to FIG. 2, the generative AI 210 is responsible for developing the generative AI model 211. Available labeled data from various sources 202, 203, 204 may be utilized to develop (train) the generative AI model 211. The labeled data sources may comprise: a synthesizer database (DB) 202 comprising synthetic data generated by a domain-knowledge-based data synthesizer 201, a real data database 203 comprising real measured sensor data 202 (time series data) of one or more motors 102, and/or a simulation data database 204 comprising simulation data of the one or more motors 102. The simulation data may be based on a digital twin of the one or more motors 102.

The synthesizer 201 is a domain-knowledge-based statistical model. In a given frequency spectrum, it is known which frequencies are present under various conditions of a motor. The magnitude of these frequency components is not easy to know beforehand. For faulty motors, the magnitudes of fault-related frequencies may be determined statistically by analyzing the real available data from laboratory experiments. For healthy motors, the magnitudes of frequencies may be determined from available (anonymized) customer data. However, these models alone cannot add realistic enough noise to imitate the real data with acceptable error. Furthermore, these models do not add frequencies that do not relate to the motor directly, which means vibrations originating from the equipment (e.g., pump, fan, gearbox, belt drive, etc.) that the motor is driving.

If there is a sufficient amount of labelled real data with faults (in the real data database 203), the generative AI model 211 can be trained based only on this real data to generate new training data, which is the optimal scenario. In other words, in this optimal scenario, the synthesizer database 202 and the simulation database 204 may not be needed. However, in the case of not enough labelled real data for fault conditions, the synthetic data 202 generated by the domain-knowledge-based data synthesizer 201, and/or the simulated data 204, can be utilized. This may be done by gathering synthesized data for the available labelled real data. In other words, it is possible to synthesize data for whatever real measurements are available by using the domain-knowledge-based synthesizer 201. In addition, the real data may be measured for newly (or recently) connected motors which are assumed to be healthy, in which case it is possible to synthesize data for these motors for "healthy" conditions.

Thus, it is possible to have a dataset comprising real data 203 with some labels as well as its synthesized version by using the domain-knowledge-based synthesizer 201 and/or simulations. In this case, the generative AI model 211 may be trained to learn how to convert the synthesized noise-free data to real data under various operating conditions. After this is achieved, the generative AI model 211 can be used to convert any synthesized data to real data, which can be used to train one or more fault classifier models 240. In this scenario, the generative AI can also be replaced by any other technique that can convert the synthesized noise-free data to real data under various operating conditions.

The purpose of the generative AI is to generate one or more signals, such as at least one of: speed, temperature, vibration, magnetic flux, and/or electric current. These signals are affected by various conditions of the one or more motors 102, such as load, motor rating and health condition. Therefore, these signals are the conditions (or inputs) to the generative AI model 211 for generating new data.

As a non-limiting example, the generative AI model 211 may be used to generate the following data (the numbers in this example are arbitrary and more conditions can be added to this): load type: pump; load magnitude: 10 kW; speed: 1000 rpm; motor rated power: 15 kW; motor rated speed: 1500 rpm; health condition: "bearing outer ring fault stage 3".

As for the model architecture of the generative AI model 211, various approaches can be used. For example, the generative AI model 211 may comprise a variational autoencoder or a generative adversarial network. The generative AI model 211 may be trained on as much data as possible, and the generative ability of the model 211 may be evaluated by using appropriate metrics and/or domain experts.

The load of an electric motor refers to the mechanical resistance or work that the motor needs to perform or overcome while operating. In other words, it is the force or torque applied to the motor's shaft that opposes its rotation. When an electric motor is connected to a mechanical system, it is required to provide the necessary torque to move or rotate the load. The load can vary depending on the application of the motor. For example, in industrial applications, the load may be a conveyor belt that needs to transport heavy materials, a pump that needs to lift water, or a fan that needs to circulate air. The motor's performance and behavior may vary depending on the load it is operating under.

The rating of the motor includes information such as power rating, voltage rating, current rating, speed rating, and shaft heigh. It represents the motor's design specifications and capabilities. The rating information may be useful for understanding the motor's expected performance and operating range.

The fine-tuning 220 involves updating the model weights of the generative AI model 211 for new data, whenever such new data is received. The data source 206 for the new data may comprise, for example, new sensor data from a new motor 205, and/or raw data from motor sensors from the field with a confirmed health condition (e.g., "healthy" or some fault condition). For example, the fine-tuning 220 may be performed by applying transfer learning.

The raw data refers to the measured time series waveform (signal) from the one or more sensors 103. For example, if a new motor is connected to the system, it is highly likely that it is a "healthy" motor. Thus, the health condition of this new motor can be marked as "healthy", and the measured data from it can be labelled as such. Then this labelled data can be supplied to the generative AI model 211 with the defined health condition (e.g., "healthy"). As explained above, the generative AI model 211 can be trained in different ways (e.g., to learn to make the simulated data realistic or directly learn to generate data only with conditions).

Transfer learning is a machine learning technique, where a pre-trained model, developed for one task or domain, is reused as the starting point for training a new model on a different but related task or domain. Instead of training a model from scratch, transfer learning leverages the knowledge and learned representations from the pre-trained model to improve the learning process and performance on the new task.

After the fine-tuning 220, the generative AI model is then used to synthesize large amounts of labelled training data 207 for different machine sizes, ratings, and under different fault and operating conditions.

For example, in the synthesized training data 207, the inputs may comprise unprocessed time series waveforms of vibration, magnetic flux, temperature, speed, and/or load in addition to static data such as load type and/or motor ratings, and the label refers to the health condition (e.g., "healthy", "bearing inner ring fault", "bearing outer ring fault", "broken rotor bar", etc.). For example, the training data may be thought of as a table, where the columns include vibration, magnetic flux, temperature, speed, load, load type, motor rated power, motor rated speed, shaft height, and label (health condition). The rows of the table then include time steps (some values remain static, such as motor ratings).

At the fault classifier training 230, the synthesized training data 207 is used to train one or more supervised fault classifier models 240 (i.e., machine learning models). The purpose of the one or more fault classifier models 240 is to determine the health condition of the one or more motors 102 based on the input signals (e.g., vibration, magnetic flux, temperature, motor rating, load type, load magnitude, and/or speed). In other words, the goal of the one or more fault classifier models 240 is to identify the health condition based on the input signals.

For example, the fault classifier model may be trained by using one of the following algorithms: extreme gradient boosting (XGBoost), RandomForests, or Support Vector Machines, to which the synthesized training data 207 may be fed.

XGBoost may work well with tabular data. XGBoost is an implementation of gradient boosting, which is a boosting technique that builds multiple weak learners (e.g., decision trees) sequentially and combines their predictions to create a stronger, more accurate predictive model. In other words, XGBoost may build a strong model by iteratively adding weak learners and adjusting their weights based on the errors of the previous learners. XGBoost may incorporate regularization techniques to prevent overfitting, such as L1 (Lasso) and L2 (Ridge) regularization, which penalize complex models. XGBoost also has built-in mechanisms for handling missing values in the dataset during training and prediction. XGBoost is designed to be computationally efficient and can take advantage of parallel processing, making it suitable for large-scale datasets. XGBoost supports various loss functions depending on the type of problem, such as mean squared error for regression tasks and log loss (cross-entropy) for binary classification. XGBoost provides a feature importance score that helps in understanding the relative importance of different features in the prediction.

The one or more trained fault classifier models 240 may then be deployed for example in the cloud platform 104 to predict the health condition of at least one of the one or more motors 102 using its sensor data (i.e., real data).

The health condition indicates whether the one or more motors 102 are healthy or in a fault condition. A fault condition indicates the specific fault or abnormality that has occurred in the motor. For example, the fault condition may comprise at least one of: bearing failure, rotor imbalance, phase imbalance, overheating, etc. Each fault condition represents a distinct problem that needs to be identified and addressed.

It should be noted that some example embodiments may also be extended to other domains, such as drive condition monitoring (in addition to motor condition monitoring).

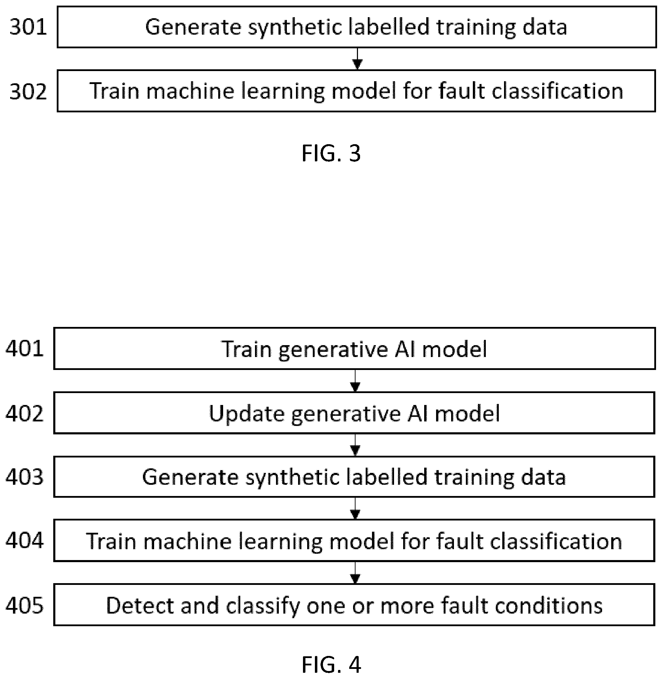

FIG. 3 illustrates a flow chart according to an example embodiment of a method performed by one or more cloud services of the cloud platform 104, or an apparatus 500 comprising, or comprised in, the cloud platform 104, or any other computing device.

Referring to FIG. 3, in block 301, synthetic labelled training data is generated based at least on a set of labelled sensor data associated with one or more industrial automation devices.

In block 302, one or more machine learning models are trained, based at least on the synthetic labelled training data, for fault classification associated with the one or more industrial automation devices.

FIG. 4 illustrates a flow chart according to an example embodiment of a method performed by one or more cloud services of the cloud platform 104, or an apparatus 500 comprising, or comprised in, the cloud platform 104, or any other computing device.

Referring to FIG. 4, in block 401, a generative artificial intelligence model is trained based on a set of labelled sensor data associated with one or more industrial automation devices, the set of labelled sensor data comprising at least one of: real sensor data, synthetic sensor data, or simulated sensor data associated with the one or more industrial automation devices.

For example, the generative artificial intelligence model may comprise a variational autoencoder or a generative adversarial network.

The set of labelled sensor data may comprise a plurality of health conditions and at least one of: speed data, temperature data, vibration data, load data, rating data, magnetic flux data, electrical current data of the one or more industrial automation devices. These measured quantities (e.g., speed, temperature, vibration, magnetic flux, electrical current) are affected by the health condition (label) of the one or more industrial automation devices.

The plurality of health conditions may comprise at least one of: a healthy status, a bearing failure, a rotor imbalance, a phase imbalance, an overheating, stator eccentricity, rotor eccentricity, a broken rotor bar, a misaligned shaft, misaligned bearings, or stator winding faults.

The one or more industrial automation devices may comprise at least one of: one or more electric motors, or one or more variable speed drives.

In block 402, the trained generative artificial intelligence model is updated (fine-tuned) based on new sensor data associated with at least one industrial automation device with a confirmed health condition (e.g., a newly installed industrial automation device with a "healthy" status). The new sensor data may be received after training the generative artificial intelligence model.

In block 403, synthetic labelled training data is generated by using the updated generative artificial intelligence model.

The synthetic labelled training data may comprise a plurality of health conditions under a plurality of operating conditions for multiple different sizes and ratings of the one or more industrial automation devices. For example, the synthetic labelled training data may comprise a plurality of health conditions and at least one of: synthetic speed data, synthetic temperature data, synthetic vibration data, synthetic load data, synthetic rating data, synthetic magnetic flux data, or synthetic electrical current data of the one or more industrial automation devices.

In block 404, one or more machine learning models are trained, based at least on the synthetic labelled training data, for fault classification associated with the one or more industrial automation devices.

For example, the one or more machine learning models may be trained by using an extreme gradient boosting (XGBoost) algorithm.

In block 405, one or more health conditions associated with at least one of the one or more industrial automation devices are detected and classified by using the trained one or more machine learning models. New sensor data, for example real-time sensor data, associated with the one or more industrial automation devices may be provided as input to the trained one or more machine learning models to detect and classify the one or more health conditions.

The functions and/or blocks described above by means of FIGS. 3-4 are in no absolute chronological order, and some of them may be performed simultaneously or in an order differing from the described one. Other functions and/or blocks may also be executed between them or within them.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

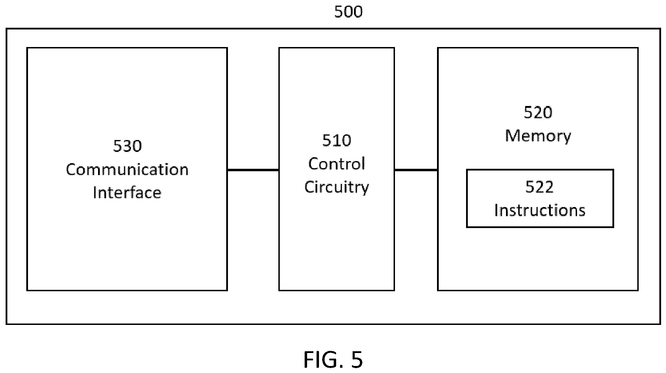

FIG. 5 illustrates an example of an apparatus 500 comprising means for performing one or more of the example embodiments described above. The apparatus 500 may comprise, or be comprised in, the cloud platform 104 or a server of the cloud platform 104. For example, the means may comprise one or more cloud services of the cloud platform 104, or the means may comprise virtualization infrastructure. Cloud services refer to a wide range of on-demand computing resources and applications that may be provided to users over the internet by the cloud platform 104. Alternatively, the apparatus 500 may comprise any other computing device.

The apparatus 500 may comprise, for example, a circuitry or a chipset applicable for realizing one or more of the example embodiments described above. The apparatus 500 may be an electronic device or computing system comprising one or more electronic circuitries. The apparatus 500 may comprise a control circuitry 510 such as at least one processor, and at least one memory 520 storing instructions 522 which, when executed by the at least one processor, cause the apparatus 500 to carry out one or more of the example embodiments described above. Such instructions 522 may, for example, include computer program code (software). The at least one processor and the at least one memory storing the instructions may provide the means for providing or causing the performance of any of the methods and/or blocks described above.

The processor is coupled to the memory 520. The processor is configured to read and write data to and from the memory 520. The memory 520 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 520 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 520 or, alternatively or additionally, they may be received, by the apparatus, via an electromagnetic carrier signal and/or may be copied from a physical entity such as a computer program product. Execution of the computer readable instructions causes the apparatus 500 to perform one or more of the functionalities described above.

The memory 520 may be implemented using any suitable data storage technology, such as semiconductor-based memory devices, flash memory, magnetic memory devices and systems, optical memory devices and systems, fixed memory and/or removable memory.

The apparatus 500 may further comprise or be connected to a communication interface 530 comprising hardware and/or software for realizing communication connectivity according to one or more communication protocols. The communication interface 530 may comprise at least one transmitter and at least one receiver that may be integrated to the apparatus 500 or that the apparatus 500 may be connected to. The communication interface 530 may provide means for performing some of the blocks for one or more example embodiments described above. The communication interface 530 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

The communication interface 530 provides the apparatus with communication capabilities to communicate in the wireless communication network. The communication interface 530 may, for example, provide a network interface for communicating with the one or more sensor devices 103 and/or the gateway device 106.

It is to be noted that the apparatus 500 may further comprise various components not illustrated in FIG. 5. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s)), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising:
means for generating synthetic labelled training data based on a set of labelled sensor data associated with one or more industrial automation devices; and
means for training, based at least on the synthetic labelled training data, one or more machine learning models for fault classification associated with the one or more industrial automation devices.

2. The apparatus according to claim 1, wherein the means for generating the synthetic labelled training data are configured to use a generative artificial intelligence model for the generating.

3. The apparatus according to claim 2, further comprising means for training the generative artificial intelligence model based on the set of labelled sensor data.

4. The apparatus according to any of claims 2-3, further comprising:
means for updating the generative artificial intelligence model based on new sensor data associated with at least one industrial automation device with a confirmed health condition,
wherein the new sensor data comprises sensor data received after the training of the generative artificial intelligence model.

5. The apparatus according to any of claims 2-4, wherein the generative artificial intelligence model comprises a variational autoencoder or a generative adversarial network.

6. The apparatus according to any preceding claim, wherein the means for training the one or more machine learning models are configured to use an extreme gradient boosting, XGBoost, algorithm for training the one or more machine learning models.

7. The apparatus according to any preceding claim, wherein the set of labelled sensor data comprises at least one of: real sensor data, synthetic sensor data, or simulated sensor data.

8. The apparatus according to any preceding claim, wherein the set of labelled sensor data comprises a plurality of health conditions and at least one of: speed data, temperature data, vibration data, load data, rating data, magnetic flux data, or electrical current data of the one or more industrial automation devices.

9. The apparatus according to any preceding claim, wherein the synthetic labelled training data comprises a plurality of health conditions under a plurality of operating conditions for multiple different sizes and ratings of the one or more industrial automation devices.

10. The apparatus according to any of claims 8-9, wherein the plurality of health conditions comprise at least one of: a healthy status, a bearing failure, a rotor imbalance, a phase imbalance, an overheating, stator eccentricity, rotor eccentricity, a broken rotor bar, a misaligned shaft, misaligned bearings, or stator winding faults.

11. The apparatus according to any preceding claim, further comprising means for detecting and classifying one or more health conditions associated with at least one of the one or more industrial automation devices by using the trained one or more machine learning models.

12. The apparatus according to any preceding claim, wherein the one or more industrial automation devices comprise at least one of: one or more electric motors, or one or more variable speed drives.

13. The apparatus according to any preceding claim, wherein the apparatus comprises, or is comprised in, a cloud platform.

14. A method comprising:
generating synthetic labelled training data based on a set of labelled sensor data associated with one or more industrial automation devices; and
training, based at least on the synthetic labelled training data, one or more machine learning models for fault classification associated with the one or more industrial automation devices.

15. A computer program comprising instructions which, when executed by an apparatus, cause the apparatus to perform at least the following:
generating synthetic labelled training data based on a set of labelled sensor data associated with one or more industrial automation devices; and
training, based at least on the synthetic labelled training data, one or more machine learning models for fault classification associated with the one or more industrial automation devices.
